# FASCICULE DE BREVET EUROPEEN

(11) **EP 1 483 952 B1**
(45) Date de publication et mention de la délivrance du brevet: **25.08.2010**
(21) Numéro de dépôt: 04300310.2
(22) Date de dépôt: 02.06.2004
(51) Int. Cl.: A01C 7/20, A01B 35/22, A01C 5/06

(54) **Elément d'une machine agricole comportant un dispositif de lestage réglable**
Element einer landwirtschaftlichen Maschine mit einer Bodendruckverstellvorrichtung
Element of an agricultural machine comprising an adjustable ballancing device

(30) Priorité: 03.06.2003 FR 0306695
(43) Date de publication de la demande: 08.12.2004
(73) Titulaire: KUHN S.A., 67700 Saverne (FR)
(72) Inventeur: Roibier, Thierry, 77370 Nangis (FR)
(74) Mandataire: Andres, Jean-Claude

(56) Documents cités:
- EP-A- 0 155 692
- US-A- 4 744 316
- US-A- 4 766 962
- US-A- 5 163 518

## Description

La présente invention se rapporte au domaine technique générale du machinisme agricole. Elle se rapporte plus particulièrement à un élément travaillant d'une machine agricole destinée à être monté sur une poutre sensiblement horizontale au moyen d'une structure de liaison comportant au moins un bras supérieur et au moins un bras inférieur, ledit élément travaillant étant soumis d'une part à un effort de terrage dirigé vers le sol et d'autre part à un lestage exercé par un dispositif de lestage comportant au moins un ressort.

L'invention concerne également les appareils agricoles équipés avec un élément travaillant conforme à l'invention. Elle se rapporte aussi à un semoir agricole équipé d'un ou de plusieurs éléments travaillant tels que décrits ci-dessus.

Ce type d'élément travaillant est connu dans le brevet US 5 555 824. Dans ce document, il s'agit d'un semoir de précision comportant plusieurs de ces éléments travaillants. Les éléments travaillants sont munis de disques permettant de former des sillons dans le sol dans lesquels des graines seront insérées. Les éléments travaillants sont liés au châssis du semoir par l'intermédiaire d'une structure de liaison respective qui est montée sur une poutre. La structure de liaison comporte deux bras inférieurs et deux bras supérieurs.

Les disques sont soumis au poids de l'élément travaillant qui les porte pour assurer la formation du sillon à une profondeur requise. Additionnelement, chaque élément travaillant est chargé par un dispositif de lestage pour faciliter l'insertion du disque dans le sol. Le lestage de l'élément travaillant est effectué grâce à des ressorts liés entre les bras supérieurs et les bras inférieurs. Les ressorts sont notamment liés à un support pourvu de deux leviers de verrouillage. La position du support est réglable au moyen des différents trous ménagés dans les bras supérieurs pour faire évoluer le lestage. Le support comporte aussi dans sa partie centrale une poignée permettant une modification du lestage selon un réglage fin et continu.

La modification du lestage des éléments travaillant se fait individuellement et par le déplacement du support d'un trou à un trou différent. A cet effet, le support guidé de part et d'autre par les bras supérieurs, coulisse sur ces derniers jusqu'à obtenir le réglage souhaité. Puis les deux leviers doivent être enclenchés dans un trou respectif Le support possédant une largeur égale à l'écartement desdits bras supérieurs et comportant de part et d'autre des surfaces permettant le guidage, l'utilisateur doit tâtonner pour enclencher les deux leviers de verrouillage dans les trous désirés car la visibilité n'est pas suffisante.

De plus pour obtenir une levée homogène des graines, chaque élément travaillant monté sur la poutre du semoir doit être chargé de la même manière. Ceci n'est pas facilement réalisable d'une part, car sur chaque élément travaillant est installé une trémie contenant des graines qui se vide au fur et à mesure de l'avancement du semoir et d'autre part par l'utilisation du réglage fin de la poignée placée sur le support. Il n'est donc pas évident de lester les différents éléments travaillant de la même manière.

La présente invention a pour but de remédier aux inconvénients précités. Elle doit notamment proposer un dispositif de lestage économique dont le réglage est simple, rapide et facilement utilisable par les utilisateurs. Par ailleurs, le dispositif de lestage devra pouvoir lester suffisamment l'élément travaillant pour l'employer dans des terres dures et/ou non travaillées.

A cet effet, une importante caractéristique de l'invention consiste en ce que ledit dispositif de lestage est constitué d'une poignée et d'au moins une crémaillère, ladite poignée comportant au moins deux tiges, que ladite poignée pivote autour de la première tige, qu'au moins un desdits ressorts dudit dispositif de lestage est lié à ladite poignée et que ladite poignée s'engage dans ladite crémaillère au moyen de la deuxième tige.

De cette manière, l'utilisateur peut adapter simplement et rapidement le réglage du lestage sur un élément travaillant. Ce réglage s'effectue sans effort pour l'utilisateur et offre une meilleure visibilité pour accéder aux différents réglages possibles de la crémaillère.

D'autres caractéristiques de l'invention, à considérer séparément ou dans toutes leurs combinaisons possibles, apparaîtront dans la description suivante d'un exemple de réalisation non limitatif de l'invention représenté sur les dessins annexés sur lesquels :
- la figure 1 représente une vue latérale simplifiée, en position levée, d'un semoir de précision conforme à l'invention ;
- la figure 2 représente une vue en perspective d'un élément travaillant conforme à l'invention dans une première position ;
- la figure 3 représente une vue de côté selon la figure 2 ;
- la figure 4 représente une vue à une autre échelle du dispositif de lestage selon la figure 2 ;
- la figure 5 représente une vue en perspective d'un élément travaillant conforme à l'invention dans une position de transfert ;
- la figure 6 représente une vue en perspective d'un élément travaillant conforme à l'invention dans une deuxième position.

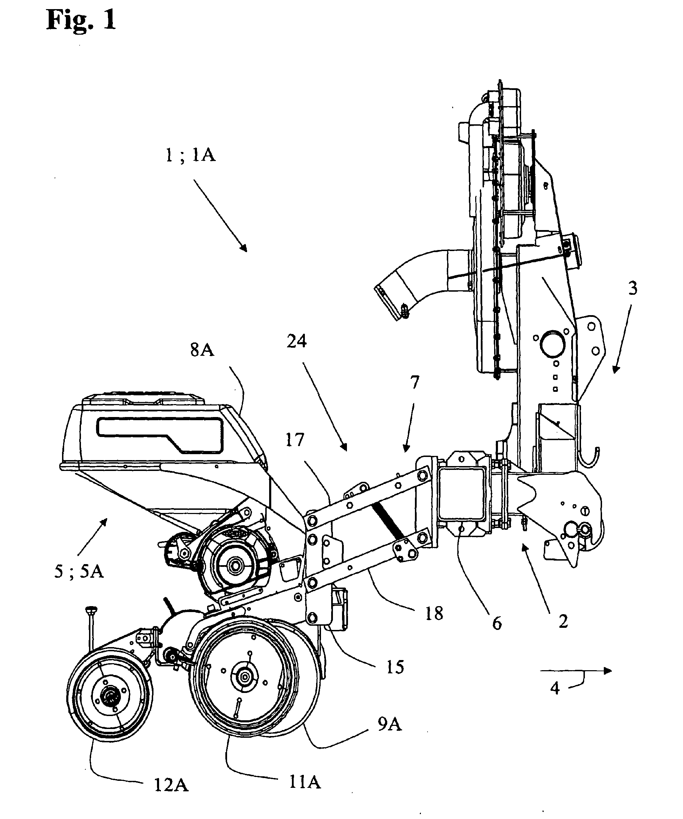

Telle que représentée sur la figure 1, la machine agricole (1) est accouplée à l'attelage arrière d'un tracteur (non représenté) et comporte ainsi un châssis (2) muni d'un attelage standard (3) pour être relié audit tracteur. Lors du travail, cette machine (1) est déplacée, suivant une direction et un sens d'avance indiqué par la flèche (4), sur un sol à travailler. Ce châssis (2) comporte entre autres plusieurs éléments travaillant (5) et une poutre (6) disposée sensiblement horizontalement et de manière transversale à la direction d'avance (4). Cette dernière est soutenue par des roues (non représentées) s'appuyant sur le sol.

Dans la suite de la description, les notions "avant" et "arrière", "devant" et "derrière" sont définies par rapport au sens d'avance (4) et les notions "droite" et "gauche" sont définies en regardant ladite machine agricole (1) de l'arrière dans ledit sens d'avance (4).

La machine agricole (1) représentée sur la figure 1 correspond à un semoir du type de précision (1A). Ce semoir (1A) assure un semis individualisé de chacune des graines et selon des rangées bien déterminées. Le semoir (1A) est aussi appelé communément semoir à élément travaillants. Les différents éléments travaillant (5) sont fixés à des intervalles réguliers sur ladite poutre (6) par l'intermédiaire d'une structure de liaison (7) respective. Ladite poutre (6) est de préférence creuse et de section carrée. Dans la réalisation figure 1, s'agissant d'un semoir de précision (1A), les éléments travaillant (5) conformes à l'invention correspondent à des éléments semeur (5A). Pour de tels semoirs (1A), il est courant d'avoir des semoirs comportant deux à douze, voire plus d'élément travaillants semeur (5A) disposés régulièrement le long de la poutre (6). Chacun d'entre eux comportant une trémie (8A) contenant les graines, des disques (9A) et une goulotte (non représentée). La trémie (8A) comporte à sa base un système de distribution des graines. Celui-ci communique directement avec la goulotte qui place la graine dans le sillon formé par lesdits disques (9A). L'élément travaillant semeur (5A) comporte également une roue de jauge (11A) latérale de contrôle de la profondeur de semis. À l'avant, l'élément travaillant semeur (5A) peut être équipé d'un dispositif chasse mottes (non représenté) et à l'arrière d'un dispositif de plombage (12A) permettant le rappui de la graine dans le sillon.

Dans la suite de la description, l'élément travaillant (5) de l'invention sera considéré comme un dispositif comportant un quelconque outil destiné à entrer en contact avec le sol dans la configuration de travail de la machine agricole (1).

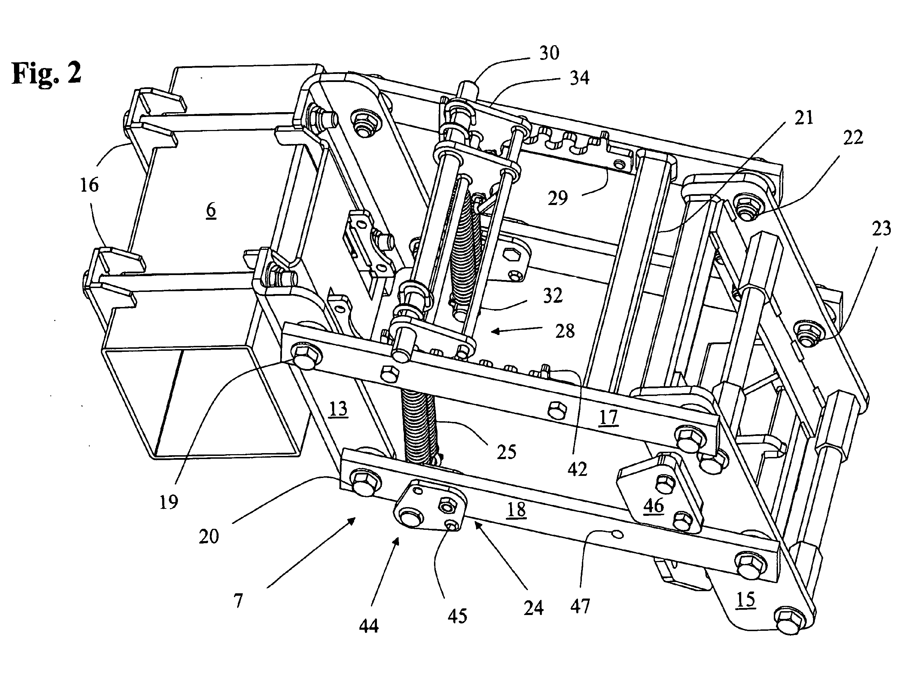

Dans le mode de réalisation représenté sur les figures 1 et 2, l'élément travaillant (5) est fixé sur ladite poutre (6) creuse par l'intermédiaire de ladite structure de liaison (7). Cette dernière comporte une pince (13) et une interface (15). La pince (13) permet de fixer la structure de liaison (7) sur ladite poutre (6) en combinaison avec deux brides (16) et plusieurs vis. Ce montage permet notamment de modifier la position et l'écartement inter-rangs des éléments travaillant (5) sur la poutre (6) pour les adapter à différents types de travaux.

Tel que représenté sur les figures, la structure de liaison (7) comporte encore au moins un bras supérieur (17) et au moins un bras inférieur (18). Chaque bras supérieur (17) est lié soit d'un côté soit de l'autre côté de la pince (13) au moyen d'une première articulation (19) respective d'axe sensiblement horizontal et transversal à la direction d'avance (4). Chaque bras inférieur (18) est fixé de la même manière de chaque côté de la pince (13) au moyen d'une deuxième articulation (20) respective d'axe sensiblement horizontal et transversal à la direction d'avance. Lesdits bras (17, 18) sont disposés selon la direction d'avance (4) et sont avantageusement parallèles entre eux. Les bras supérieurs (17) sont encore liés entre eux par un tube de liaison (21) permettant de maintenir un écartement constant entre lesdits bras supérieurs (17). L'extrémité arrière desdits bras (17, 18) est, pour sa part, liée à l'interface (15) au moyen d'une troisième et d'une quatrième articulation (22, 23) respective d'axe sensiblement horizontal et transversal. Ladite pince (13) avec un bras supérieur (17), un bras inférieur (18) et l'interface (15) définissent avantageusement un parallélogramme. Ledit tube de liaison (21) reliant les deux bras supérieurs (17) permet également de rigidifier la structure de liaison (7). L'interface (15) est un support permettant de recevoir l'élément travaillant (5) et différents équipements optionnels.

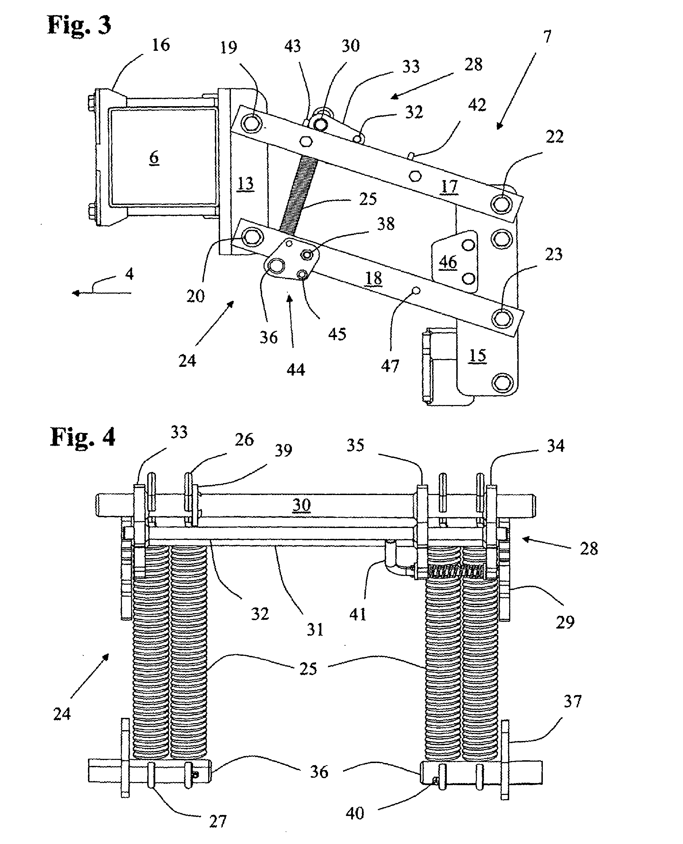

Grâce à cette structure de liaison (7) en forme de parallélogramme telle que représentée sur la figure 3, l'élément travaillant (5) est libre en hauteur et peut suivre fidèlement les dénivellations du sol. Pour assurer une profondeur de travail régulière, l'élément travaillant (5) est doté d'une roue de jauge (11) prenant appui sur le sol. Dans la phase de travail, l'outil qui est fixé sur l'élément travaillant (5) a naturellement tendance à entrer dans le sol car il est soumis à un effort dirigé vers le sol résultant du poids de l'élément travaillant (5) appelé aussi pression de terrage.

Il est courant sur ce genre de machine (1), d'une part que l'élément travaillant (5) soit soumis à une pression de terrage améliorant l'action des outils en contact avec le sol. D'autre part pour augmenter encore davantage l'action de l'outil, lié à l'élément travaillant (5), vis à vis du sol, il est connu de lester l'élément travaillant (5). A cet effet, l'élément travaillant (5) comporte un dispositif de lestage (24) constitué de plusieurs ressorts (25) de traction à spires jointives. Lesdits ressorts (25) sont disposés entre le bras supérieur (17) et le bras inférieur (18) respectif de la structure de liaison (7). Chaque ressort comporte un point d'ancrage supérieur et un point d'ancrage inférieur. Ledit point d'ancrage supérieur (26) est lié au bras supérieur (17) alors que ledit point d'ancrage inférieur (27) est lié au bras inférieur (18). Le lestage permet, en plus de la pression de terrage, d'ajouter du poids sur l'élément travaillant (5) afin d'effectuer un travail dans des conditions plus difficiles. Par exemple, d'utiliser un semoir conventionnel pour faire du semis simplifié ou même du semis direct. Le sol étant plus dur, le poids de l'élément semeur seul ne permet pas à l'outil d'entrer dans le sol pour atteindre la profondeur requise.

En pratique, il est intéressant de pouvoir soit augmenter, soit diminuer le lestage c'est à dire augmenter ou diminuer le poids à appliquer sur l'élément travaillant (5) pour s'adapter aux différentes conditions et structures du sol. Dans le mode de réalisation représenté et selon une caractéristique importante, le dispositif de lestage (24) comprend une poignée (28) associée à au moins une crémaillère (29).

A la lumière des figures 2, 5 et 6, la poignée (28) est constituée d'une première tige (30), d'une deuxième tige (31) et d'une troisième tige (32). Les trois tiges (30, 31, 32) sont disposées horizontalement et perpendiculairement à la direction d'avance (4). Ces trois tiges (30, 31, 32) sont liées entre elles par des plaques (33, 34, 35) dans lesquelles elles sont enfilées. Lesdites plaques (33, 34, 35) ont sensiblement la forme d'un triangle. Les plaques de gauche et de droite (33, 34) sont fixées sensiblement à l'extrémité desdites tiges (30, 31, 32) alors que la plaque intermédiaire (35) est placée à une certaine distance de ladite plaque de droite (34) vers l'intérieur de la structure de liaison (7). Au moins deux desdites tiges (30, 31, 32) sont avantageusement disposées au voisinage d'un sommet du triangle. La première tige (30) s'appuie sur les bras supérieurs (17) alors que la deuxième tige (31) et la troisième tige (32) sont disposées d'une manière avantageuse entre lesdits bras supérieurs (17).

Selon une autre caractéristique importante de la présente invention, la poignée (28) pivote autour de la première tige (30) pour modifier le lestage de l'élément travaillant (5). La première tige (30) étant soutenue par lesdits bras supérieurs (17), elle coulisse sur lesdits bras supérieurs (17). D'une manière préférentielle, la première tige (30) comporte un diamètre supérieur et une longueur supérieure aux deux autres tiges (31, 32). La deuxième tige (31) et la troisième tige (32) sont, quant à elles, identiques en longueur et comportent un diamètre similaire. La première tige (30) permet ainsi de guider le déplacement de la poignée (28) sur lesdits bras supérieurs (17) et fait également office d'axe de rotation pour ladite poignée (28).

Selon l'exemple de réalisation du dispositif de lestage (24) représenté sur la figure 4, les ressorts (25) sont avantageusement montés par paire. Lesdits ressorts (25) sont strictement identiques. Un groupe de ressorts (25) est monté plutôt dans le voisinage du bras supérieur (17) gauche et un autre groupe de ressorts (25) est monté dans le voisinage du bras supérieur (17) droit. Le point d'ancrage supérieur (26) de chaque ressort (25) est avantageusement lié à la première tige (30) et le point d'ancrage inférieur (27) est avantageusement lié à un tube inférieur (36). Ledit tube inférieur (36) comporte avantageusement un diamètre identique à ladite première tige (30). Le tube inférieur (36) est lié audit bras inférieur (18) respectif par l'intermédiaire de deux chapes (37). Lesdites chapes (37) sont liées audit bras inférieur (18) respectif par tout moyen connu. Dans la réalisation représentée, le moyen de liaison connu correspond à un boulon (38). D'une manière préférentielle, le tube inférieur (36) est en deux parties, une est liée au bras inférieur (18) gauche et l'autre est liée au bras inférieur (18) droit. Le diamètre du tube inférieur (36) et du premier tube (30) est adapté au diamètre du point d'ancrage supérieur (26) et du point d'ancrage inférieur (27) du ressort (25).

D'une manière connue de l'homme de l'art, lorsqu'un élément travaillant (5) est plus ou moins lester par l'action desdits ressorts (25), la position desdits ressorts (25) est plus ou moins inclinée vers l'arrière compte tenu de la direction d'avance (4). Le point d'ancrage inférieur (27) est alors disposé dans le proche voisinage de la poutre (6) alors que le point d'ancrage supérieur (26) a plutôt tendance à se rapprocher de l'élément travaillant (5).

D'après la figure 4, le point d'ancrage supérieur (26) des ressorts de gauche (25) est monté entre la plaque de gauche (33) et un élément d'arrêt réalisé sous la forme d'une rondelle (39) faisant office de butée tandis que le point d'ancrage supérieur (26) des ressorts de droite (25) est monté entre la plaque de droite (34) et la plaque intermédiaire (35). Le point d'ancrage inférieur (27) des deux groupes de ressorts (25) est maintenu d'une part entre une chape (37) et d'autre part un autre élément d'arrêt réalisé sous la forme d'une goupille (40). Le tube inférieur (36) étant réalisé en deux parties, le point d'ancrage inférieur (27) de chaque ressort (25) peut facilement être enfilé autour dudit tube inférieur (36) puis par groupe de deux être bloqué par ladite goupille (40).

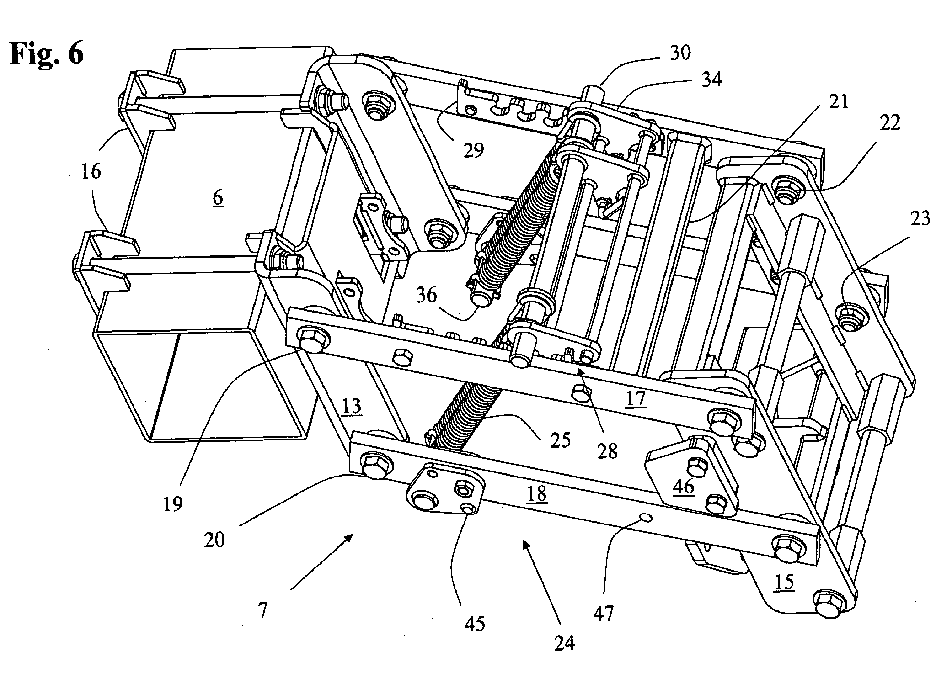

Selon les figures, chaque bras supérieur (17) est doté d'une crémaillère (29) respective. Chaque crémaillère (29) est fixée sur la partie interne du bras supérieur (17) à l'aide de tout moyen connu. Les crémaillères (29) sont munies de crans réalisant différent réglage pour le lestage d'un élément travaillant (5). Ladite poignée (28) s'engage dans lesdits crans desdites crémaillères (29) au moyen de ladite deuxième tige (31). Ladite deuxième tige (28) permet ainsi d'assurer le positionnement de la poignée (28) par rapport dans un desdits crans de la crémaillère (29) pour un réglage donné du dispositif de lestage (24). Chaque crémaillère (29) comporte de préférence cinq crans de réglage. La longueur de la deuxième tige (31) est sensiblement égale à l'écartement entre lesdits bras supérieurs (17). Lesdites plaques de gauche et de droite (33, 34) sont disposées au voisinage desdites crémaillères (29). La figure 2 représente le dispositif de lestage (24) dans sa première position. Dans cette position avancée, le lestage de l'élément travaillant (5) est plutôt faible voire presque nul. Le dispositif de lestage (24) représenté sur la figure 6 est dans sa dernière position. Dans cette position reculée du dispositif de lestage (24), la charge sur l'élément travaillant (5) est maximale.

Dans la configuration de travail, la poignée (28) est maintenue dans un desdits crans de la crémaillère (29) grâce à l'engagement de ladite deuxième tige (31) dans un desdits crans. Pour éviter que la deuxième tige (31) ne sorte dudit cran lors du franchissement d'un obstacle au travail, ladite poignée (28) comporte, en sus, un levier de verrouillage (41). Ledit levier de verrouillage (41) bloque la poignée (28) dans la position souhaitée. Il est avantageusement logé dans la plaque intermédiaire (35) et dans la plaque de droite (34). Dans la position verrouillée, le levier (41) est en contact avec le dessous de la crémaillère (29). Ce levier de verrouillage (41) passe au travers d'un des sommets du triangle, celui qui est encore libre, de la plaque intermédiaire (35) et la plaque de droite (34). D'une manière préférentielle, la deuxième tige (31) traverse ainsi plutôt un côté desdites plaques (33, 34, 35) et est avantageusement disposé entre la première tige (30) et le levier de verrouillage (41). La forme des crans est étudiée pour bloquer la deuxième tige (31) au travail et éviter tout effort sur le levier de verrouillage (41). L'utilisation d'un tel levier de verrouillage (41) est connue de l'homme de l'art. Le levier de verrouillage (41) représenté sur la figure 4 est dans sa position verrouillée. La partie du levier de verrouillage (41) entre la plaque de droite (34) et la plaque intermédiaire (35) est munie d'un système à ressort permettant le maintien de ladite poignée (28) dans la position choisie.

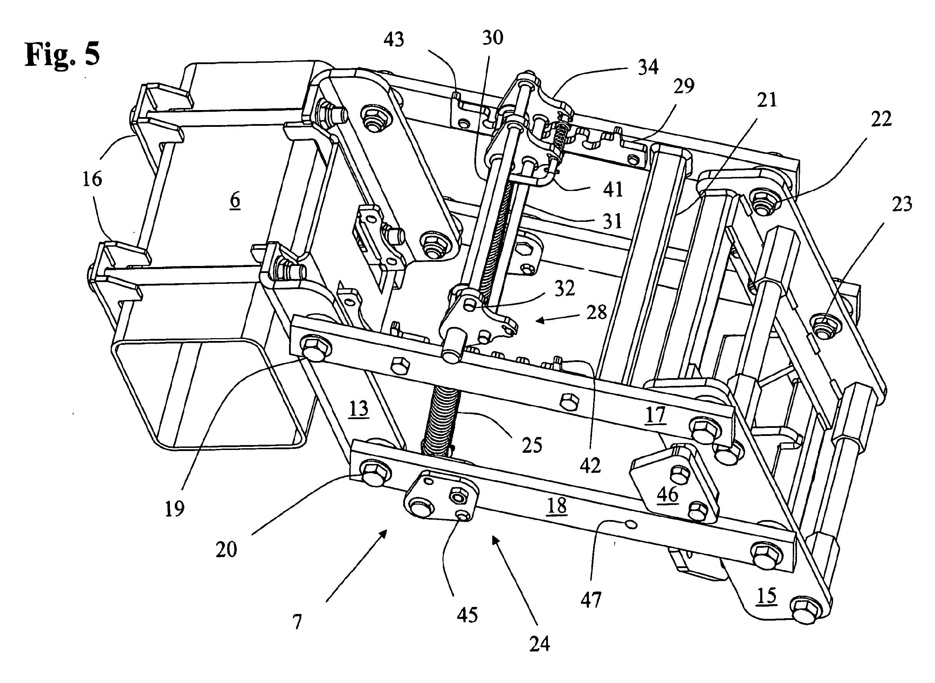

La figure 5 représente la poignée (28) dans une position de transfert. Cette position de transfert permet à l'utilisateur de modifier le lestage de l'élément travaillant (5). Il est impératif que l'élément travaillant (5) ne repose pas sur le sol, lorsque l'utilisateur veut modifier le lestage. Ainsi, l'attelage arrière du tracteur et la poutre (6) sont relevés pour que les éléments travaillant (5) soient dans leur position basse tel que représenté à la figure 5. Dans cette position basse, les bras supérieurs (17) se rapproche au plus près des bras inférieurs (18) et ainsi le réglage du lestage s'effectue sans effort car les ressorts (25) ne sont plus sous tension. Lorsque la machine (1) est levée, le réglage du lestage se fait comme suit
- l'utilisateur déverrouille le levier de verrouillage (41) en le tirant vers l'intérieur de la structure de liaison (7) et le pivote d'environ un quart de tour pour le bloquer dans la position déverrouillée, ensuite
- l'utilisateur pivote ladite poignée (28) autour de ladite première tige (30) au moyen de la troisième tige (32), ce qui permet de désengager ladite deuxième tige (31) de la crémaillère (29), puis
- l'utilisateur coulisse la poignée (28) sur lesdits bras supérieurs (17) pour atteindre le cran correspondant au lestage désiré, et pour finir
- l'utilisateur pivote ladite poignée (28) mais cette fois dans le sens inverse pour que chaque extrémité de la deuxième tige (31) vienne s'engager dans ledit cran souhaité de chaque crémaillère (29), puis il verrouille cette position grâce audit levier de verrouillage (41).

Pour pivoter la poignée (28), l'utilisateur prend la troisième tige (32) et la pivote vers le haut autour de ladite première tige (30). Lorsque la machine agricole (1) est levée, les ressorts (25) ne sont plus tendus car l'élément travaillant (5) a atteint sa position basse dans laquelle les bras supérieurs (17) se sont rapprochés des bras inférieurs (18). Ainsi la poignée (28) peut se déplacer librement sur voire même au-dessus des bras supérieurs (17). La première tige (30) peut alors coulisser sur les bras supérieurs (17) entre une butée arrière (42) et une butée avant (43). Ces deux butées (42, 43) appartiennent avantageusement auxdites crémaillères (29). Le déplacement de la première tige (30) entre les deux butées (42, 43) se fait très facilement comme l'élément travaillant (5) est en position basse, les ressorts (25) ne sont plus sous contrainte. La longueur des ressorts (25) est adaptée pour que le déplacement de la poignée (28) se fasse librement.

La longueur du ressort (25) est déterminée lorsque le bras supérieur (17) est au plus près du bras inférieur (18), c'est-à-dire en position basse. La longueur à vide du ressort (25) est alors sensiblement égale à l'écartement entre le point d'ancrage inférieur (27) et le point d'ancrage supérieur (26) lorsque la poignée (28) est dans sa dernière position comme représentée sur la figure 6. Ainsi lorsque la poignée (28) est dans sa première position, telle que représenté sur la figure 2. Dans cette première position, les ressorts (25) sont légèrement trop longs, et afin d'éviter que les ressorts (25) se désengagent dudit premier tube (30), il est prévu d'une part que le point d'ancrage supérieur (26) soit pourvu d'une grande boucle permettant de maintenir chaque ressort (25) en position. Par ailleurs, le point d'ancrage inférieur (27) comporte plutôt une petite boucle qui est destinée à être glissée autour dudit tube inférieur (36).

Il est à noter que le réglage du lestage est individualisé pour chaque élément travaillant (5). Il faut donc modifier le lestage pour chaque élément travaillant (5) monté sur la poutre (6), pour obtenir un travail homogène sur toute la largeur de la machine agricole (1). Ce réglage du lestage peut être aisément reproduit pour les différents éléments travaillant (5) composant la machine agricole (1) grâce à l'emploi de ladite crémaillère (29).

D'autre part, le dispositif de lestage (24) comporte un système d'ajustement (44) permettant de rattraper le jeu des ressorts (25) lorsque la poignée (28) est placée dans sa première position. Le système d'ajustement (44) permet d'assurer que le point d'ancrage supérieur (26) est bien en contact avec la première tige (30). A cet effet, le système d'ajustement (44) est avantageusement lié aux bras inférieurs (18). Le système d'ajustement (44) est réalisé à l'aide desdites chapes (37). Chaque chape (37) est liée au bras inférieur (18) correspondant au moyen d'un boulon (38) et supporte ledit tube inférieur (36). Ce tube inférieur (36) est lié auxdites chapes (37) de manière à être plus ou moins en contact avec la partie basse des bras inférieurs (18). Le tube inférieur (36) peut ainsi pivoter autour de l'axe du boulon (38) pour rattraper le jeu au niveau du point d'ancrage supérieur (26). Le système d'ajustement (44) peut être bloqué par un axe passant par l'ouverture (45) ménagée dans lesdites chapes (37).

Les figures 2 et 6 représentent la poignée (28) dans la configuration de travail car la deuxième tige (31) est engagée dans les crémaillères (29) et le levier de verrouillage (41) est bloqué. Le débattement de la structure de liaison (7) est limité verticalement au moyen d'au moins une butée (46). Une telle butée (46) est montée de chaque côté de l'interface (15). On remarque sur les figures que les bras inférieurs (18) sont en contact avec une butée (46) respective. Cette butée (46) permet de limiter le déplacement de la structure de liaison (7) vers le bas lorsque les bras inférieurs (18) sont en contact avec la butée (46). Ainsi toutes les figures représentent la structure de liaison (7) en position basse. Le débattement vers le haut étant limité par ladite même butée (46) qui vient en contact avec les bras supérieurs (17). Lors du travail, les bras supérieurs (17) et les bras inférieurs (18) sont avantageusement dans une position sensiblement horizontale et disposent d'une certaine liberté de mouvement jusqu'à venir en contact avec la butée (46) correspondante.

Au cours de l'utilisation de cette machine agricole (1) et dans certaines conditions de travail, il est nécessaire d'alléger l'élément travaillant (5) d'une partie de son poids c'est à dire de le délester. Le délestage à plutôt tendance à relever l'élément travaillant (5) par rapport au sol. Une telle configuration du dispositif de lestage (24) est obtenue lorsque l'inclinaison des ressorts (25) est préférablement vers l'avant de la machine (1). Ainsi le point d'ancrage supérieur (26) est situé dans le proche voisinage de la poutre (6) alors que le point d'ancrage inférieur (27) est disposé sensiblement dans le proche voisinage de l'interface (15) portant un élément travaillant (5). Pour cette configuration, lesdites chapes (37) sont avantageusement montées dans une autre ouverture (47) des bras inférieurs (18). La configuration de délestage d'un élément travaillant (5) n'est pas représentée sur les figures.

Il est encore à noter qu'à la différence des modes opératoires de lestage et de délestage décrit précédemment, le lestage d'un élément travaillant (5) peut aussi être modifié sans faire pivoter ladite poignée (28). Il suffit de lever ladite poignée (28) pour dégager la deuxième tige (31) du cran et de la réengager dans un autre cran. Il faut bien sûr déverrouiller et verrouiller la poignée de verrouillage (41). En opérant de cette manière, l'adaptation du lestage de l'élément travaillant (5) est plus difficile, il faut donc tirer plus ou moins sur lesdits ressorts (25) afin de les allonger pour pouvoir réengager la deuxième tige (31) dans une autre position desdites crémaillères (29).

L'élément (5 ; 5A) et la machine (1 ; 1A) qui viennent d'être décrits, ne sont qu'un exemple de réalisation et d'utilisation qui ne saurait en aucun cas limiter le domaine de protection défini par les revendications suivantes. Différentes modifications restent possibles, notamment en ce qui concerne la constitution des divers éléments travaillant (5) ou par substitution d'équivalents techniques.

C'est ainsi qu'il est parfaitement possible que la poutre (6) soit une poutre (6) monobarre ou monopoutre, ou par exemple une poutre (6) composée de plusieurs parties permettant le repliage du semoir ou encore une poutre (6) télescopique.

L'élément travaillant (5) décrit peut très bien être remplacé par tout appareil ayant un élément travaillant en contact avec le sol tel qu'un équipement pour la formation de sillon. La fonction semer n'est pas indispensable pour cette invention.

Il est encore possible de monter directement l'élément travaillant (5) à l'extrémité des bras supérieurs et inférieurs (17, 18) sans utiliser une interface (15).

Les dimensions (longueur, diamètre) des différentes tiges (30, 31, 32) décrites dans la présente invention sont uniquement la représentation d'un mode de réalisation. Elles peuvent avoir une forme différente par exemple une section hexagonale ou carrée. De même lesdites plaques (33, 34, 35) peuvent avoir une forme différente de celle d'un triangle.

## Revendications

1. Élément travaillant (5) d'une machine agricole (1) destiné à être monté sur une poutre (6) sensiblement horizontale au moyen d'une structure de liaison (7) comportant au moins un bras supérieur (17) et au moins un bras inférieur (18), ledit élément travaillant (5) étant soumis d'une part à un effort de terrage dirigé vers le sol et d'autre part à un lestage exercé par un dispositif de lestage (24) comportant au moins un ressort (25), ***caractérisé par le fait que*** ledit dispositif de lestage (24) est constitué d'une poignée (28) et d'au moins une crémaillère (29), ladite poignée (28) comportant au moins deux tiges (30, 31, 32), que ladite poignée (28) pivote autour de la première tige (30), qu'au moins un desdits ressorts (25) dudit dispositif de lestage (24) est lié à ladite poignée (28) et que ladite poignée (28) s'engage dans ladite crémaillère (29) au moyen de la deuxième tige (31).

2. Élément travaillant selon la revendication 1, ***caractérisé par le fait que*** chaque ressort (25) comporte un point d'ancrage supérieur (26) et un point d'ancrage inférieur (27), ledit point d'ancrage supérieur (26) est lié à ladite poignée (28) via une première tige (30).

3. Élément travaillant selon la revendication **1, *caractérisé par le fait que* ladite** poignée (28) pivote autour de ladite première tige (30) pour modifier le lestage de l'élément travaillant (5).

4. Élément travaillant selon l'une quelconque des revendications 1 à 3, ***caractérisé par le fait que*** ladite poignée (28) se déplace au-dessus desdits bras supérieurs (17).

5. Élément travaillant selon l'une quelconque des revendications 1 à 4, ***caractérisé par le fait que*** ladite crémaillère (29) comporte au moins une position de réglage.

6. Élément travaillant selon l'une quelconque des revendications 1 à 5, ***caractérisé par le fait que*** lorsque la poignée (28) est dans sa première position de réglage, les ressorts (25) ont du mou.

7. Élément travaillant selon l'une quelconque des revendications 1 à 6, ***caractérisé par le fait que*** ledit dispositif de lestage (24) comporte, en sus, un système de rattrapage de jeu (44) fixé sur lesdits bras inférieurs (18).

8. Élément travaillant selon l'une quelconque des revendications 1 à 7, ***caractérisé par le fait que*** le débattement vertical de la structure de liaison (7) est limité par une butée (46).

9. Élément travaillant selon l'une quelconque des revendications 1 à 8, ***caractérisé par le fait que*** ladite poignée comporte, en sus, une troisième tige (32), lesdites tiges (30, 31, 32) sont liées au moyen d'au moins une plaque (33, 34, 35).

10. Élément travaillant selon l'une quelconque des revendications 1 à 9, ***caractérisé par le fait que*** ladite poignée (28) comporte un levier de verrouillage (41) permettant de bloquer le pivotement de ladite poignée (28) autour de ladite première tige (30).

11. Appareil agricole (1) comportant un châssis (2) supporté par des roues, ledit châssis comportant une poutre (6) et au moins un élément travaillant (5), ***caractérisé par le fait que*** ledit élément travaillant (5) est tel que défini selon l'une des revendications 1 à 10.

12. Appareil agricole selon la revendication 11, ***caractérisé par le fait que*** ledit appareil agricole (1) est un semoir (1A) et que l'élément travaillant (5) et un élément semeur (5A).

## Claims

1. Working element (5) of an agricultural machine (1) intended to be mounted on a substantially horizontal beam (6) by means of a linking structure (7) comprising at least one upper arm (17) and at least one lower arm (18), the said working element (5) being subjected to, on the one hand, a depth control force directed towards the ground and, on the other hand, a ballasting exerted by a ballasting device (24) comprising at least one spring (25), ***characterized in* that** the said ballasting device (24) is constituted of a handle (28) and at least one rack (29), the said handle (28) comprising at least two rods (30, 31,32), that the said handle (28) pivots around the first rod (30), that at least one of the said springs (25) of the said ballasting device (24) is connected to the said handle (28) and that the said handle (28) engages in the said rack (29) by means of the second rod (31).

2. Working element according to claim 1, ***characterized in* that** each spring (25) comprises an upper anchoring point (26) and a lower anchoring point (27), the said upper anchoring point (26) is connected to the said handle (28) via a first rod (30).

3. Working element according to claim 1, ***characterized in* that** the said handle (28) pivots around the said first rod (30) to modify the ballasting of the working element (5).

4. Working element according to any one of claims 1 to 3, ***characterized in* that** the said handle (28) displaces above the said upper arms (17).

5. Working element according to any one of claims 1 to 4, ***characterized in* that** the said rack (29) comprises at least one adjustment position.

6. Working element according to any one of claims 1 to 5, ***characterized in* that** when the handle (28) is in its first adjustment position, the springs (25) have some slack.

7. Working element according to any one of claims 1 to 6, ***characterized in* that** the said ballasting device (24) comprises, moreover, a taking up system (44) fixed on the said lower arms (18).

8. Working element according to any one of claims 1 to 7, ***characterized in* that** the vertical travel of the linking structure (7) is limited by a stop (46).

9. Working element according to any one of claims 1 to 8, ***characterized in* that** the said handle comprises, moreover, a third rod (32), the said rods (30, 31, 32) are connected by means of at least one plate (33, 34, 35).

10. Working element according to any one of claims 1 to 9, ***characterized in* that** the said handle (28) comprises a locking lever (41) allowing the pivoting of the said handle (28) around the said first rod (30) to be blocked.

11. Agricultural machine (1) comprising a frame (2) supported by wheels, the said frame comprising a beam (6) and at least one working element (5), ***characterized in* that** the said working element (5) is such as defined according to one of claims 1 to 10.

12. Agricultural machine according to claim 11, ***characterized in* that** the said agricultural machine (1) is a seed drill (1A) and that the working element (5) is a sowing element (5A).

## Patentansprüche

1. Arbeitselement (5) einer landwirtschaftlichen Maschine (1), das dazu bestimmt ist, auf einen im Wesentlichen horizontalen Balken (6) mittels einer Verbindungsstruktur (7) mit mindestens einem oberen Arm (17) und mindestens einem unteren Arm (18), montiert zu werden, wobei das Arbeitselement (5) einerseits einer zum Boden gerichteten Tiefebeanspruchung und andererseits einem Ballast, der von einer Ballastvorrichtung (24) mit mindestens einer Feder (25), ausgeübt wird, ausgesetzt ist, ***dadurch gekennzeichnet,* dass** die Ballastvorrichtung (24) von einem Griff (28) und mindestens einer Zahnstange (29) gebildet ist, wobei der Griff (28) mindestens zwei Stangen (30, 31, 32) umfasst, dass der Griff (28) um die erste Stange (30) schwenkt, dass mindestens eine der Federn (25) der Ballastvorrichtung (24) mit dem Griff (28) verbunden ist, und dass der Griff (28) in die Zahnstange (29) mittels der zweiten Stange (31) eingreift.

2. Arbeitselement nach Anspruch 1, ***dadurch gekennzeichnet,* dass** jede Feder (25) einen oberen Verankerungspunkt (26) und einen unteren Verankerungspunkt (27) umfasst, wobei der obere Verankerungspunkt (26) mit dem Griff (28) über eine erste Stange (30) verbunden ist.

3. Arbeitselement nach Anspruch 1, ***dadurch gekennzeichnet,* dass** der Griff (28) um die erste Stange (30) schwenkt, um den Ballast des Arbeitselements (5) zu verändern.

4. Arbeitselement nach irgend einem der Ansprüche 1 bis 3, ***dadurch gekennzeichnet,* dass** sich der Griff (28) über den oberen Armen (17) verschiebt.

5. Arbeitselement nach irgend einem der Ansprüche 1 bis 4, ***dadurch gekennzeichnet,* dass** die Zahnstange (29) mindestens eine Verstellposition umfasst.

6. Arbeitselement nach irgend einem der Ansprüche 1 bis 5, ***dadurch gekennzeichnet,* dass** die Federn (25), wenn sich der Griff (28) in seiner ersten Verstellposition befindet, nicht gespannt sind.

7. Arbeitselement nach irgend einem der Ansprüche 1 bis 6, ***dadurch gekennzeichnet,* dass** die Ballastvorrichtung (24) zusätzlich ein System (44) zur Spielnachstellung umfasst, das auf den unteren Armen (18) montiert ist.

8. Arbeitselement nach irgend einem der Ansprüche 1 bis 7, ***dadurch gekennzeichnet,* dass** der Vertikalausschlag der Verbindungsstruktur (7) durch einen Anschlag (46) begrenzt ist.

9. Arbeitselement nach irgend einem der Ansprüche 1 bis 8, ***dadurch gekennzeichnet,* dass** der Griff zusätzlich eine dritte Stange (32) umfasst, wobei die Stangen (30, 31, 32) mittels mindestens einer Platte (33, 34, 35) verbunden sind.

10. Arbeitselement nach irgend einem der Ansprüche 1 bis 9, ***dadurch gekennzeichnet,* dass** der Griff (28) einen Verriegelungshebel (41) umfasst, der es ermöglicht, das Schwenken des Griffes (28) um die erste Stange (30) festzustellen.

11. Landwirtschaftliche Maschine (1) mit einem Gestell (2), das von Rädern getragen wird, wobei das Gestell einen Träger (6) und mindestens ein Arbeitselement (5) umfasst, ***dadurch gekennzeichnet,* dass** das Arbeitselement (5) derart beschaffen ist, wie in einem der Ansprüche 1 bis 10 definiert.

12. Landwirtschaftliche Maschine nach Anspruch 11, ***dadurch gekennzeichnet,* dass** die landwirtschaftliche Maschine (1) eine Sämaschine (1A) ist, und dass das Arbeitselement (5) ein Säelement (5A) ist.
